# EUROPEAN PATENT APPLICATION

(11) **EP 1 264 846 A1**
(43) Date of publication of application: **11.12.2002**
(21) Application number: 02253757.5
(22) Date of filing: 29.05.2002
(51) Int. Cl.: C08B 15/04, D21H 11/20, D21C 9/00

(54) **Method for preparation of stabilized carboxylated cellulose**

(30) Priority: 06.06.2001 US 875240
(71) Applicant: Weyerhaeuser Company, Federal Way, WA 98063-9777 (US)
(72) Inventor: Komen, Joseph Lincoln, Bothell, Washington 98012 (US); Weerawarna, Ananda S., Seattle, Washington 98125 (US); Jewell, Richard A., Bellevue, Washington 98006 (US)
(74) Representative: Trueman, Lucy Petra

(57) **Abstract**

The invention is directed to a method of making a heat and light stable carboxylated cellulose fiber whose fiber strength and degree of polymerization is not significantly sacrificed. The method involves the use of a catalytic amount of a hindered cyclic oxammonium salt as a primary oxidant and a peracid and halide salt as a secondary oxidant in an aqueous environment. The oxammonium compounds may be formed *in situ* from their corresponding amine, hydroxylamine, and nitroxyl compounds. The oxidized cellulose is then stabilized against D.P. loss and color reversion by further treatment with an oxidant such as sodium chlorite, a chlorine dioxide/hydrogen peroxide mixture, or a peracid under acidic conditions. Alternatively it may be treated with a reducing agent such as sodium borohydride. The method results in a high percentage of carboxyl groups located at the fiber surface. The product is especially useful as a papermaking fiber where it contributes strength and has a higher attraction for cationic additives. The product is also useful as an additive to recycled fiber to increase strength. The method can be used to improve properties of either virgin or recycled fiber. It does not require high α-cellulose fiber but is suitable for regular market pulps.

## Description

The present invention is a process for preparation of a heat and light stable fibrous carboxylated cellulose suitable for papermaking and related applications. The fibrous product of the invention is one in which fiber strength and degree of polymerization are not significantly sacrificed. The process is particularly environmentally advantageous since no chlorine or hypochlorite compounds are required.

### Background of the Invention

Cellulose is a carbohydrate consisting of a long chain of glucose units, all β-linked through the 1'-4 positions. Native plant cellulose molecules may have upwards of 2200 anhydroglucose units. The number of units is normally referred to as degree of polymerization or simply D.P. Some loss of D.P. inevitably occurs during purification. A D.P. approaching 2000 is usually found only in purified cotton linters. Wood derived celluloses rarely exceed a D.P. of about 1700. The structure of cellulose can be represented as follows:

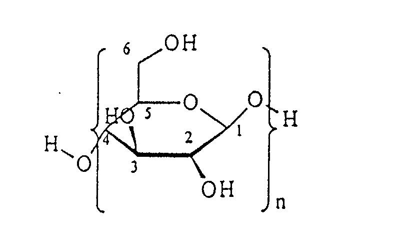

Chemical derivatives of cellulose have been commercially important for almost a century and a half. Nitrocellulose plasticized with camphor was the first synthetic plastic and has been in use since 1868. A number of cellulose ether and ester derivatives are presently commercially available and find wide use in many fields of commerce. Virtually all cellulose derivatives take advantage of the reactivity of the three available hydroxyl groups. Substitution at these groups can vary from very low; e.g. about 0.01 to a maximum 3.0. Among important cellulose derivatives are cellulose acetate, used in fibers and transparent films; nitrocellulose, widely used in lacquers and gun powder; ethyl cellulose, widely used in impact resistant tool handles; methyl cellulose, hydroxyethyl, hydroxypropyl, and sodium carboxymethyl cellulose, water soluble ethers widely used in detergents, as thickeners in foodstuffs, and in papermaking.

Cellulose itself has been modified for various purposes. Cellulose fibers are naturally anionic in nature as are many papermaking additives. A cationic cellulose is described in Harding et al. U. S. Patent No. 4,505,775. This has greater affinity for anionic papermaking additives such as fillers and pigments and is particularly receptive to acid and anionic dyes. Jewell et al., in U. S. Patent No. 5,667,637, teach a low degree of substitution (D.S.) carboxyethyl cellulose which, along with a cationic resin, improves the wet to dry tensile and burst ratios when used as a papermaking additive. Westland, in U. S. Patent No. 5,755,828 describes a method for increasing the strength of articles made from cross linked cellulose fibers having free carboxylic acid groups obtained by covalently coupling a polycarboxylic acid to the fibers.

For some purposes cellulose has been oxidized to make it more anionic; e.g., to improve compatibility with cationic papermaking additives and dyes. Various oxidation treatments have been used. Various oxidation treatments have been used. U.S. Patent No. 3,575,177 to Briskin et al. describes a cellulose oxidized with nitrogen dioxide useful as a tobacco substitute. The oxidized material may then be treated with a borohydride to reduce functional groups, such as aldehydes, causing off flavors. After this reduction the product may be further treated with an oxidizing agent such as hydrogen peroxide for further flavor improvement. Other oxidation treatments use nitrogen dioxide and periodate oxidation coupled with resin treatment of cotton fabrics for improvement in crease recovery as suggested by R. T. Shet and A. M. Yabani, *Textile Research Journal* Nov. 1981: 740-744. Earlier work by K. V. Datye and G. M. Nabar, *Textile Research Journal*, July 1963: 500-510, describes oxidation by metaperiodates and dichromic acid followed by treatment with chlorous acid for 72 hours or 0.05 M sodium borohydride for 24 hours. Copper number was greatly reduced by borohydride treatment and less so by chlorous acid. Carboxyl content was slightly reduced by borohydride and significantly increased by chlorous acid. The products were subsequently reacted with formaldehyde. P. Luner et al., *Tappi* **50**(3): 117-120 (1967) oxidized southern pine kraft springwood and summer wood fibers with potassium dichromate in oxalic acid. Handsheets made with the fibers showed improved wet strength believed due to aldehyde groups. P. Luner et al., in *Tappi* **50**(5): 227-230 (1967) expanded this earlier work and further oxidized some of the pulps with chlorite or reduced them with sodium borohydride. Handsheets from the pulps treated with the reducing agent showed improved sheet properties over those not so treated. R. A. Young, *Wood and Fiber,* **10**(2): 112-119 (1978) describes oxidation primarily by dichromate in oxalic acid to introduce aldehyde groups in sulfite pulps for wet strength improvement in papers.

Brasey et al, in U.S. Patent 4,100,341, describe oxidation of cellulose with nitric acid. They note that the reaction was specific at the C6 position and that secondary oxidation at the C2 and C3 positions was not detected. They further note that the
product was "... stable without the need for subsequent reduction steps or the introduction of further reactants [e.g., aldehyde groups] from which the oxidized cellulose has to be purged".

V. A. Shenai and A. S. Narkhede, *Textile Dyer and Printer* May 20, 1987: 17-22 describe the accelerated reaction of hypochlorite oxidation of cotton yarns in the presence of physically deposited cobalt sulfide. The authors note that partial oxidation has been studied for the past hundred years in conjunction with efforts to prevent degradation during bleaching. They also discuss in some detail the use of 0.1 M sodium borohydride as a reducing agent following oxidation. The treatment was described as a useful method of characterizing the types of reducing groups as well as acidic groups formed during oxidation. The borohydride treatment noticeably reduced copper number of the oxidized cellulose. Copper number gives an estimate of the reducing groups such as aldehydes present on the cellulose. Borohydride treatment also reduced alkali solubility of the oxidized product but this may have been related to an approximate 40% reduction in carboxyl content of the samples.

R. Andersson et al. in *Carbohydrate Research* **206:** 340-346 (1990) teach oxidation of cellulose with sodium nitrite in orthophosphoric acid and describe nuclear magnetic resonance elucidation of the reaction products.

An article by P. L. Anelli et al. in *Journal of Organic Chemistry* **54:** 2970-2972 (1989) appears to be one of the earlier papers describing oxidation of hydroxyl compounds by oxammonium salts. They employed a system of 2,2,6,6-tetramethyl-piperidinyloxy free radical (TEMPO) with sodium hypochlorite and sodium bromide in a two phase system to oxidize 1,4-butanediol and 1,5-pentanediol.

R. V. Casciani et al, in French Patent 2,674,528 (1992) describe the use of sterically hindered N-oxides for oxidation of polymeric substances, among them alkyl polyglucosides having primary hydroxyl groups. A preferred oxidant was TEMPO although many related nitroxides were suggested. Calcium hypochlorite was present as a secondary oxidant.

N. J. Davis and S. L. Flitsch, *Tetrahedron Letters* **34**(7): 1181-1184 (1993) describe the use and reaction mechanism of (TEMPO) with sodium hypochlorite to achieve selective oxidation of primary hydroxyl groups of monosaccharides. Following the Davis et al. paper this route to carboxylation then began to be very actively explored, particularly in the Netherlands and later in the United States. A. E. J. de Nooy et al., in a short paper in *Receuil des Travaux Chimiques des Pays-Bas* **113:** 165-166 (1994), report similar results using TEMPO and hypobromite for oxidation of primary alcohol groups in potato starch and inulin. The following year, these same authors in *Carbohydrate Research* **269:** 89-98 (1995) report highly selective oxidation of primary alcohol groups in water soluble glucans using TEMPO and a hypochlorite/bromide oxidant.

European Patent Application 574,666 to Kaufhold et al. describes a group of nitroxyl compounds based on TEMPO substituted at the 4-position. These are useful as oxidation catalysts using a two phase system. Formation of carboxylated cellulose did not appear to be contemplated.

PCT published patent application WO 95/07303 (Besemer et al.) describes a method of oxidizing water soluble carbohydrates having a primary alcohol group, using TEMPO, or a related di-tertiary-alkyl nitroxide, with sodium hypochlorite and sodium bromide. Cellulose is mentioned in passing in the background although the examples are principally limited to starches. The method is said to selectively oxidize the primary alcohol at C-6 to carboxyl. None of the products studied were fibrous in nature.

A year following the above noted Besemer PCT publication, the same authors, in *Cellulose Derivatives*, T. J. Heinze and W. G. Glasser, eds., Ch. 5, pp 73-82 (1996), describe methods for selective oxidation of cellulose to 2,3-dicarboxy cellulose and 6-carboxy cellulose using various oxidants. Among the oxidants used were a periodate/chlorite/hydrogen peroxide system, oxidation in phosphoric acid with sodium nitrate/nitrite, and with TEMPO and a hypochlorite/bromide primary oxidant. Results with the TEMPO system were poorly reproduced and equivocal. The statement that "... some of the material remains undissolved" was puzzling. In the case of TEMPO oxidation of cellulose, little or none would have been expected to go into water solution unless the cellulose was either badly degraded and/or the carboxyl substitution was very high. The homogeneous solution of cellulose in phosphoric acid used for the sodium nitrate/sodium nitrite oxidation was later treated with sodium borohydride to remove any carbonyl function present.

De Nooy et al. have published a very extensive review, both of the literature and the chemistry of nitroxyls as oxidizers of primary and secondary alcohols, in *Synthesis: Journal of Synthetic Organic Chemistry* (10): 1153-1174 (1996).

Heeres et al., in PCT application WO 96/38484, discuss oxidation of carbohydrate ethers useful as sequestering agents. They use the TEMPO oxidation system described by the authors just noted above to produce relatively highly substituted products, including cellulose.

In WO 96/36621, Heeres et al. describe a method of recovering TEMPO and its related compounds following their use as an oxidation catalyst. An example is given of the oxidation of starch followed by TEMPO recovery using azeotropic distillation.

P.-S. Chang and J. F. Robyt, *Journal of Carbohydrate Chemistry* ***15***(7): 819-830 (1996),describe oxidation often polysaccharides including α-cellulose at 0°C and 25°C using TEMPO with sodium hypochlorite and sodium bromide. Ethanol addition was used to quench the oxidation reaction. The resulting oxidized α-cellulose had a water solubility of 9.4%. The authors did not further describe the nature of the α-cellulose. It is presumed to have been a so-called dissolving pulp or cotton linter cellulose.

D. Barzyk et al., in *Journal of pulp and paper Science* **23**(2): J59-J61 (1997) and in *Transactions of the 11*^{*th*} *Fundamental Research Symposium,* Vol. 2, 893-907 (1997), note that carboxyl groups on cellulose fibers increase swelling and impact flexibility, bonded area and strength. They designed experiments to increase surface carboxylation of fibers. However, they ruled out oxidation to avoid fiber degradation and chose to form carboxymethyl cellulose in an isopropanol/methanol system.

Isogai, A. and Y. Kato, in *Cellulose* **5:** 153-164 (1998) describe treatment of several native, mercerized, and regenerated celluloses with TEMPO to obtain water soluble and insoluble polyglucuronic acids. They note that the water soluble products had almost 100% carboxyl substitution at the C-6 site. They further note that oxidation proceeds heterogeneously at the more accessible regions on solid cellulose.

Isogai, in *Cellulose Communications* **5**(3): 136-141 (1998) describes preparation of water soluble oxidized cellulose products using mercerized or regenerated celluloses as starting materials in a TEMPO oxidation system. Using native celluloses or bleached wood pulp he was unable to obtain a water soluble material since he achieved only low amounts of conversion. He further notes the beneficial properties of the latter materials as papermaking additives.

Kitaoka et al., in a preprint of a short 1998 paper for *Sen'i Gakukai* (Society of Studies of Fiber) speak of their work in the surface modification of fibers using a TEMPO mediated oxidation system. They were concerned with the receptivity of alum-based sizing compounds.

PCT application WO 99/23117 (Viikari et al.) teaches oxidation using TEMPO in combination with the enzyme laccase or other enzymes along with air or oxygen as the effective oxidizing agents of cellulose fibers, including kraft pine pulps.

Kitaoka, T., A., A. Isogai, and F. Onabe, in *Nordic Pulp and Paper Research Journal*, **14**(4): 279-284 (1999), describe the treatment of bleached hardwood kraft pulp using TEMPO oxidation. Increasing amounts of carboxyl content gave some improvement in dry tensile index, Young's modulus and brightness, with decreases in elongation at breaking point and opacity. Other strength properties were unaffected. Retention of PAE-type wet strength resins was somewhat increased. The products described did not have any stabilization treatment after the TEMPO oxidation.

Van der Lugt et al., in WO 99/57158, describe the use of peracids in the presence of TEMPO or another di-tertiary alkyl nitroxyl for oxidation of primary alcohols in carbohydrates. They claim their process to be useful for producing uronic acids and for introducing aldehyde groups that are suitable for crosslinking and derivitization. Among their examples are a series of oxidations of starch at pH ranges from 5-10 using a system including TEMPO, sodium bromide, EDTA, and peracetic acid. Carboxyl substitution was relatively high in all cases, ranging from 26-91% depending on reaction pH.

Besemer et al. in PCT published application WO 00/50388 teach oxidation of various carbohydrate materials in which the primary hydroxyls are converted to aldehyde groups. The system uses TEMPO or related nitroxyl compounds in the presence of a transition metal using oxygen or hydrogen peroxide.

Jaschinski et al. In PCT published application WO 00/50462 teach oxidation of TEMPO oxidized bleached wood pulps to introduce carboxyl and aldehyde groups at the C6 position. The pulp is preferably refined before oxidation. One process variation uses low pH reaction conditions without a halogen compound present. The TEMPO is regenerated by ozone or another oxidizer, preferably in a separate step. In particular, the outer surface of the fibers are said to be modified. The products were found to be useful for papermaking applications.

Jetten et al. in related PCT applications WO 00/50463 and WO 00/50621 teach TEMPO oxidation of cellulose along with an enzyme or complexes of a transition metal. A preferred complexing agent is a polyamine with at least three amino groups separated by two or more carbon atoms. Manganese, iron, cobalt, and copper are preferred transition metals. Although aldehyde substitution at C6 seems to be preferred, the primary products can be further oxidized to carboxyl groups by oxidizers such as chlorites or hydrogen peroxide.

TEMPO catalyzed oxidation of primary alcohols of various organic compounds is reported in U.S. Patent Nos. 6,031,101 to Devine et al. and 6,127,573 to Li et al. The oxidation system is a buffered two phase system employing TEMPO, sodium chlorite, and sodium hypochlorite. The above investigators are joined by others in a corresponding paper to Zhao et al., *Journal of Organic Chemistry* **64:** 2564-2566 (1999). Similarly, Einhorn et al., *Journal of Organic Chemistry* **61:** 7452-7454 (1996) describe TEMPO used with *N*-chlorosuccinimide in a two phase system for oxidation of primary alcohols to aldehydes.

I. M. Ganiev et al in *Journal of Physical Organic Chemistry* **14:** 38-42 (2001) describe a complex of chlorine dioxide with TEMPO and its conversion into oxammonium salt. Specific applications of the synthesis product were not noted.

Isogai, in Japanese Kokai 2001-4959A, describes treating cellulose fiber using a TEMPO/ hypochlorite oxidation system to achieve low levels of surface carboxyl substitution. The treated fiber has good additive retention properties without loss of strength when used in papermaking applications.

Published European Patent Applications 1,077,221; 1,027,285; and 1,077,286 to Cimecloglu et al. respectively describe a polysaccharide paper strength additive, a paper product, and a modified cellulose pulp in which aldehyde substitution has been introduced using a TEMPO/hypochlorite system.

Published PCT application WO 01/29309 to Jewell et al. describes a cellulose fiber carboxylated using TEMPO or its related compounds which is stabilized against color or D.P. degradation by then use of a reducing or additional oxidizing step to eliminate aldehyde or ketone substitution introduced during the primary oxidation.

None of the previous workers have described a stabilized fibrous carboxylated cellulose that can be made and used in conventional papermill equipment, using environmentally friendly chemicals, with no requirement for chlorine or hypochlorites.

### Summary of the Invention

The present invention is directed to a method for preparation of a fibrous carboxylated cellulose product using a hindered cyclic oxammonium salt as a primary oxidant. This may be generated *in situ* by the oxidation of a corresponding amine, hydroxylamine, or nitroxide. The method does not require an alkali metal or alkaline earth hypochlorite compound as a secondary oxidant to regenerate the nitroxide. Instead, a peracid salt has been discovered to serve this function. An alkali metal halide, preferably an alkali metal bromide, is used in conjunction with the peracid to promote the nitroxide regeneration. The initially oxidized product is then treated, preferably with a tertiary oxidant or, alternatively, with a reducing agent, to convert any unstable substituent groups into carboxyl or hydroxyl groups.

In the discussion and claims that follow, the terms nitroxide, oxammonium salt, amine, or hydroxylamine of a corresponding hindered heterocyclic amine compound should be considered as full equivalents. The oxammonium salt is the catalytically active form but this is an intermediate compound that is formed from a nitroxide, continuously used to become a hydroxylamine, and then regenerated, presumably back through the nitroxide. The secondary oxidant will convert the amine form to the free radical nitroxide compound. Unless otherwise specified, the term "nitroxide" will normally be used hereafter in accordance with the most common usage in the related literature.

A chemically purified fibrous cellulose market pulp is the basic material for the process. This may be, but is not limited to, bleached or unbleached sulfite, kraft, or prehydrolyzed kraft hardwood or softwood pulps or mixtures of hardwood and softwood pulps. While included within the broad scope of the invention, so-called high alpha cellulose or chemical pulps; i.e., those with an α-cellulose content greater than about 92%, are not generally preferred as raw materials.

The suitability of lower cost market pulps is a significant advantage of the process. Market pulps are used for many products such as fine papers, diaper fluff, paper towels and tissues, etc. These pulps generally have about 86-88% α-cellulose and 12-14% hemicellulose whereas the high α-cellulose chemical or dissolving pulps have about 92-98% α-cellulose. By stable is meant minimum D.P. loss in alkaline environments, and very low self cross linking and color reversion. The method of the invention is particularly advantageous for treating secondary (or recycled) fibers. Bond strength of the sheeted carboxylated fibers is significantly improved over untreated recycled fiber.

The "cellulose" used with the present invention is preferably a wood based cellulose market pulp below 90% α-cellulose, generally having about 86-88% α-cellulose and a hemicellulose content of about 12%.

The process of the invention will lead to a product having an increase in carboxyl substitution over the starting material of at least about 2 meq/100g, preferably at least about 5 meq/100g. Carboxylation occurs predominantly at the hydroxyl group on C-6 of the anhydroglucose units to yield uronic acids. Carboxyl levels up to about 35-40 meq/100g can be produced in a one step process. Substitution may be increased to considerably higher levels by multistage addition of the oxidants.

The cellulose fiber in an aqueous slurry or suspension is first oxidized by addition of a primary oxidizer comprising a cyclic oxammonium salt. This may be conveniently formed *in situ* from a corresponding amine, hydroxylamine or nitroxyl compound which lacks any α-hydrogen substitution on either of the carbon atoms adjacent the nitroxyl nitrogen atom. Substitution on these carbon atoms is preferably one or two carbon alkyl groups. For sake of convenience in the following description it will be assumed, unless otherwise noted, that a nitroxide is used as the primary oxidant and that term should be understood to include all of the percursors of the corresponding nitroxide or its oxammonium salt.

Nitroxides having both five and six membered rings have been found to be satisfactory. Both five and six membered rings may have either a methylene group or a heterocyclic atom selected from nitrogen, sulfur or oxygen at the four position in the ring, and both rings may have one or two substituent groups at this location.

A large group of nitroxide compounds have been found to be suitable. 2,2,6,6-tetramethylpiperidinyl-1-oxy free radical (TEMPO) is among the exemplary nitroxides found useful. Another suitable product linked in a mirror image relationship to TEMPO is 2,2,2'2',6,6,6',6'-octamethyl-4,4'-bipiperidinyl-1,1'-dioxy di-free radical (BI-TEMPO). Similarly, 2,2,6,6-tetramethyl-4-hydroxypiperidinyl-1-oxy free radical; 2,2,6,6-tetramethyl-4-methoxypiperidinyl-1-oxy free radical; and 2,2,6,6-tetramethyl-4-benzyloxypiperidinyl-1-oxy free radical; 2,2,6,6-tetramethyl-4-aminopiperidinyl-1-oxy free radical; 2,2,6,6-tetramethyl-4-acetylaminopiperidinyl-1-oxy free radical; 2,2,6,6-tetramethyl-4-piperidone-1-oxy free radical and ketals of this compound are examples of compounds with substitution at the 4 position of TEMPO that have been found to be very satisfactory oxidants. Among the nitroxides with a second hetero atom in the ring at the four position (relative to the nitrogen atom), 3,3,5,5-tetramethylmorpholine-1-oxy free radical (TEMMO) is very useful.

The nitroxides are not limited to those with saturated rings. One compound anticipated to be a very effective oxidant is 3,4-dehydro-2,2,6,6-tetramethyl-piperidinyl-1-oxy free radical.

Six membered ring compounds with double substitution at the four position have been especially useful because of their relative ease of synthesis and lower cost. Exemplary among these are the 1,2-ethanediol, 1,3-propanediol, 2,2-dimethyl-1,3-propanediol, (1,3-neopentyldiol), and glyceryl cyclic ketals of 2,2,6,6-tetramethyl-4-piperidone-1-oxy free radical.

Among the five membered ring products, 2,2,5,5-tetramethyl-pyrrolidinyl-1-oxy free radical has been found to be very effective.

The above named compounds should only be considered as exemplary among the many representatives of the nitroxides suitable for use with the invention and those named are not intended to be limiting in any way.

It is also considered to be within the scope of the invention to form the nitroxides *in situ* by oxidation of the corresponding amines or hydroxylamines of any of the nitroxide free radical products. Oxammonium salts of the nitroxides are produced by oxidation of the corresponding nitroxide, hydroxylamine, or amine. These oxammonium salts are known to oxidize primary alcohols to aldehydes and aldehydes to carboxyl groups. While the nitroxide is consumed and converted to an oxammonium salt then to a hydroxylamine during the oxidation reaction, it is continuously regenerated by the presence of a secondary oxidant. Basic peroxymonosulfuric acid is a preferred secondary oxidant. Since the nitroxide is not irreversibly consumed in the oxidation reaction only a catalytic amount is required. During the course of the reaction it is the secondary oxidant which will be depleted. The amount of nitroxide required is in the range of about 0.005% to 1.0% by weight based on cellulose present, preferably about 0.02-0.25%. The nitroxide is known to preferentially oxidize the primary hydroxyl located on C-6 of the anhydroglucose moiety of cellulose. It can be assumed that a similar oxidation will occur at primary alcohol groups on hemicellulose.

While the free radical form of the selected nitroxide may be used, it is often preferable to begin with the corresponding amine and form the nitroxide and oxammonium salt *in situ*. Among the many possible amino compounds useful as starting materials can be mentioned 2,2,6,6-tetramethylpiperidine, 2,2,6,6-tetramethyl-4-piperidone (triacetone amine), ketals prepared by reacting triacetone amine with 1,2-ethanediol, 1,3-propanediol, glycerol, diglycerol, polyglycerol, and alkyl or carboxyl substituted forms of the above diols and polyols.

The peracid used as a secondary oxidant may be any peralkanoic acid such as peracetic acid or perpropionic acid, substituted alkanoic acids such as peroxy-trifluoroacetic acid, substituted aromatic peracids such as perbenzoic acid or *m*-chloroperbenzoic acid, or an inorganic peracid such as peroxymonosulfuric acid, or salts of the above peracids. Peroxymonosulfuric acid (Caro's acid) is a preferred compound.

The usual procedure is to slurry the cellulose fiber in a suitable amount of peracid solution at about pH 5 to 8.5, preferably about 7.5-8.0. The chosen peracid is present in an amount of about 0.1-10% by weight of cellulose, preferably 0.5-5% by weight. To this is added a catalytic amount (0.005-1.0% by weight of cellulose, preferably about 0.02-0.25%) of the nitroxide compound or one of its percursors along with 0.1-10.0% of the alkali metal halide. This is added to the pulp slurry and allowed to react for from 1 minute to 10 hours, preferably about 0.2 to 2.5 hours, at a temperature from about 5°-95°C more preferably about 20°-80°C.

Following oxidation, the cellulose is normally washed to remove any residual chemicals and may then be further processed. To achieve maximum stability and D.P. retention, the oxidized product is reslurried in water for treatment with a stabilizing agent to convert any substituent groups, such as aldehydes or ketones, to hydroxyl or carboxyl groups. The stabilizing agent may either be another oxidizing agent or a reducing agent. Unstabilized oxidized pulps have objectionable color reversion and may self crosslink upon drying, thereby reducing their ability to redisperse and form strong bonds when used in sheeted cellulose products.

Alkali metal chlorites are one class of oxidizing agents used as stabilizers, sodium chlorite being preferred because of the cost factor. Other compounds that may serve equally well as oxidizers are permanganates, chromic acid, bromine, and silver oxide. A combination of chlorine dioxide and hydrogen peroxide is also an excellent oxidizer. Peracids under acidic conditions are also very useful as stabilizing agents.

Stabilization using sodium chlorite may be carried out at a pH in the range of about 0-5, preferably 2-4, at temperatures between about 10°-110°C, preferably about 20°-95°C for times from about 0.5 minutes to 50 hours, preferably about 10 minutes to 2 hours. One factor that favors oxidants as opposed to reducing agents is that aldehyde groups on the oxidized cellulose are converted to additional carboxyl groups, thus resulting in a more highly carboxylated product. These stabilizing oxidizers are referred to as "tertiary oxidizers" to distinguish them from the nitroxide/peracid primary/secondary oxidizers. The tertiary oxidizer is used in a molar ratio of about 1.0-15 times the presumed aldehyde content of the oxidized cellulose, preferably about 5-10 times. In a more convenient way of measuring the required tertiary oxidizer needed, the preferred sodium chlorite usage should fall within about 0.1-20% by weight of cellulose, preferably about 1-9% by weight, the chlorite being calculated on a 100% active material basis.

When stabilizing with a ClO₂ and H₂O₂ mixture, the concentration of ClO₂ present should be in a range of about 0.1-20% by weight of cellulose, preferably about 0.3-1.0%, and concentration of H₂O₂ should fall within the range of about 0.01-10% by weight of cellulose, preferably 0.05-1.0%. Time will generally fall within the range of 0.5 minutes to 50 hours, preferably about 10 minutes to 2 hours and temperature within the range of about 10°-110°C, preferably about 30°-95°C. The pH of the system is preferably about 2-3 but may be in the range of 0-5.

Peracids may be used as oxidative stabilizers under both acidic and alkaline conditions, generally within a pH range of about 2-7.5. A peracid concentration of about 0.1-10% by weight of cellulose present is satisfactory.

A preferred reducing agent is an alkali metal borohydride. Sodium borohydride (NaBH₄) is preferred from the standpoint of cost and availability. However, other borohydrides such as LiBH₄, or alkali metal cyanoborohydrides such as NaBH₃CN are also suitable. NaBH₄ may be mixed with LiCl to form a very useful reducing agent. When NaBH₄ is used for reduction, it should be present in an amount between about 0.1 and 10.0 g/L. A more preferred amount would be about 0.25-5 g/L and a most preferred amount from about 0.5-2.0 g/L. Based on cellulose the amount of reducing agent should be in the range of about 0.1% to 4% by weight, preferably about 1-3%. Reduction may be carried out at room or higher temperature for a time between 10 minutes and 10 hours, preferably about 30 minutes to 2 hours.

After stabilization is completed, the cellulose is again washed and may be dried if desired. Alternatively, the carboxyl substituents may be converted to other cationic forms beside hydrogen or sodium; e.g., calcium, magnesium, or ammonium.

One particular advantage of the process is that all reactions are carried out in an aqueous medium to yield a product in which the carboxylation is primarily located on the fiber surface. This conveys highly advantageous properties for papermaking. The product of the invention will have at least about 20% of the total carboxyl content on the fiber surface. Untreated fiber will typically have no more than a few milliequivalents of total carboxyl substitution and, of this, no more than about 10% will be located on the fiber surface.

The carboxylated fiber of the invention is highly advantageous as a papermaking furnish, either by itself or in conjunction with conventional fiber. It may be used in amounts from 0.5-100% of the papermaking furnish. The carboxylated fiber is especially useful in admixture with recycled fiber to add strength. The method can be used to improve properties of either virgin or recycled fiber. The increased number of anionic sites on the fiber should serve to ionically hold significantly larger amounts of cationic papermaking additives than untreated fiber. These additives may be wet strength resins, sizing chemical emulsions, filler and pigment retention aids, charged filler particles, dyes and the like. Carboxylated pulps do not hornify (or irreversibly collapse) as much on drying and are a superior material when recycled. They swell more on rewetting, take less energy to refine, and give higher sheet strength.

It is thus an object of the invention to provide a method of making a cellulose fiber having enhanced carboxyl content using an aqueous reaction medium.

It is also an object to provide a method for making a carboxylated cellulose fiber that does not employ chlorine or hypochlorite compounds.

It is another object to provide a process for making a carboxylated cellulose fiber that can be carried out in equipment commonly found in pulp or paper mills.

It is a further object to provide a cellulose fiber having an enhanced carboxyl content at the fiber surface.

It is yet an object to provide a carboxylated cellulose fiber that is stable against D.P. loss in alkaline environments.

It is an object to provide a stable cellulose fiber of enhanced carboxyl content with a D.P. of at least 850 measured as a sodium salt or 700 when measured in the free acid form.

It is still an object to provide a cellulose fiber having a high ionic attraction to cationic papermaking additives.

It is an additional object to provide cellulose pulp and paper products containing the carboxyl enhanced fiber.

These and many other objects will become readily apparent upon reading the following detailed description taken in conjunction with the drawings

### Detailed Description of the Preferred Embodiments

Abundant laboratory data indicates that a nitroxide catalyzed cellulose oxidation predominantly occurs at the primary hydroxyl group on C-6 of the anhydroglucose moiety. In contrast to some of the other routes to oxidized cellulose, only very minor reaction has been observed to occur at the secondary hydroxyl groups at the C-2 and C-3 locations. Using TEMPO as an example of one useful nitroxide, the mechanism to formation of a carboxyl group at the C-6 location proceeds through an intermediate aldehyde stage.

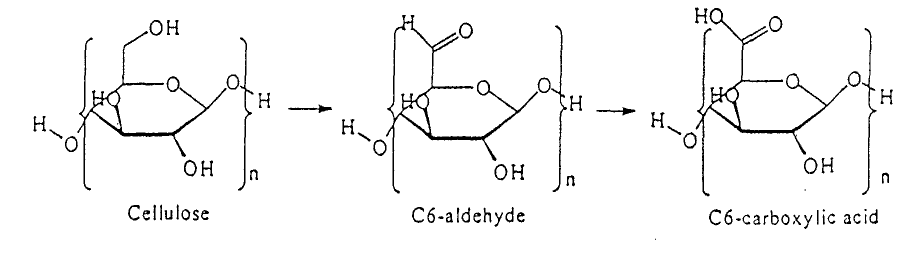

The TEMPO is not irreversibly consumed in the reaction but is continuously regenerated. It is converted by the secondary oxidant into the oxammonium (or nitrosonium) ion which is the actual oxidant. During oxidation the nitrosonium ion is reduced to the hydroxylamine from which TEMPO is again formed. Thus, it is secondary oxidant which is actually consumed. TEMPO may be reclaimed or recycled from the aqueous system. The reaction is postulated to be as follows:

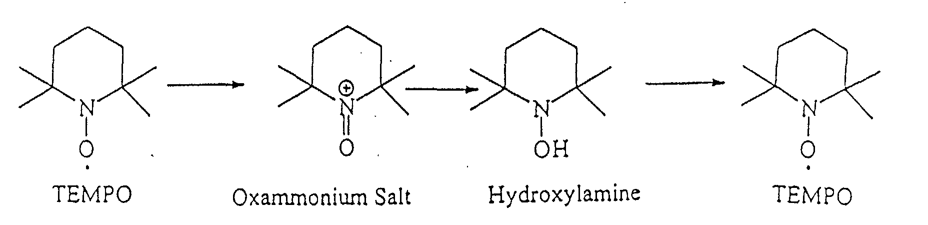

As was noted earlier, formation of TEMPO *in situ* by oxidation of the corresponding hydroxylamine or amine is considered to be within the scope of the invention.

The resulting oxidized cellulose product will have a mixture of carboxyl and aldehyde substitution. Aldehyde substituents on cellulose are known to cause degeneration over time and under certain environmental conditions. In addition, minor quantities of ketone carbonyls may be formed at the C-2 and C-3 positions of the anhydroglucose units and these will also lead to degradation. Marked D.P., fiber strength loss, crosslinking, and yellowing are among the problems encountered. For these reasons, we have found it very desirable to oxidize aldehyde substituents to carboxyl groups, or reduce then to hydroxyl groups, to ensure stability of the product.

The following groups of nitroxy compounds are known to be effective primary oxidants: 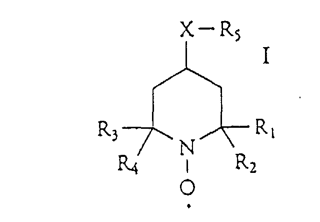 in which R₁-R₄ are one to four carbon alkyl groups but R₁ with R₂ and R₃ with R₄ may together be included in a five or six carbon alicyclic ring structure; X is sulfur or oxygen; and R₅ is hydrogen, C₁-C₁₂ alkyl, benzyl, 2-dioxanyl, a dialkyl ether, an alkyl polyether, or a hydroxyalkyl, and X with R₅ being absent may be hydrogen or a mirror image moiety to form a bipiperidinyl nitroxide. Specific compounds in this group known to be very effective are 2,2,6,6-tetramethylpiperidinyl-1-oxy free radical (TEMPO); 2,2,2',2',6,6,6',6'-octamethyl-4,4'-bipiperidinyl-1,1'-dioxy di-free radical (BI-TEMPO); 2,2,6,6-tetramethyl-4-hydroxypiperidinyl-1-oxy free radical (4-hydroxy-TEMPO); 2,2,6,6-tetramethyl-4-methoxypiperidinyl-1-oxy free radical (4-methoxy-TEMPO); and 2,2,6,6-tetramethyl-4-benzyloxypiperidinyl-1-oxy free radical (4-benzyloxy-TEMPO). 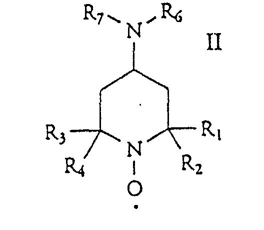 in which R₁-R₄ are one to four carbon alkyl groups but R₁ with R₂ and R₃ with R₄ may together be included in a five or six carbon alicyclic ring structure; R₆ is hydrogen or C₁- C₅ alkyl; R₇ is hydrogen, C₁-C₈ alkyl, phenyl, carbamoyl, alkyl carbamoyl, phenyl carbamoyl, or C₁-C₈ acyl. Exemplary of this group is 2,2,6,6-tetramethyl-4-aminopiperidinyl-1-oxy free radical (4-amino-TEMPO); and 2,2,6,6-tetramethyl-4-acetylaminopiperidinyl-1-oxy free radical (4-acetylamino-TEMPO). 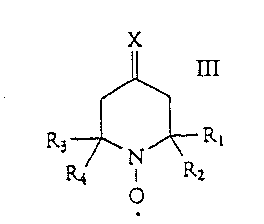 in which R₁-R₄ are one to four carbon alkyl groups but R₁ with R₂ and R₃ with R₄ may together be included in a five or six carbon alicyclic ring structure; and X is oxygen, sulfur, NH, N-alkyl, NOH, or NOR₈ where R₈ is lower alkyl. An example might be 2,2,6,6-tetramethyl-4-oxopiperidinyl-1-oxy free radical (2,2,6,6-tetramethyl-4-piperidone-1-oxy free radical). 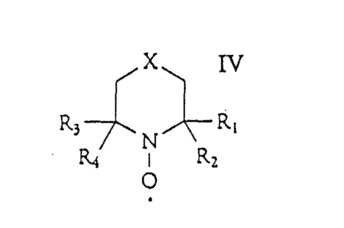 wherein R₁-R₄ are one to four carbon alkyl groups but R₁ with R₂ and R₃ with R₄ may be linked into a five or six carbon alicyclic ring structure; X is oxygen, sulfur, -alkyl amino, or acyl amino. An example is 3,3,5,5-tetramethylmorpholine-4-oxy free radical. In this case the oxygen atom takes precedence for numbering but the dimethyl substituted carbons remain adjacent the nitroxide moiety. 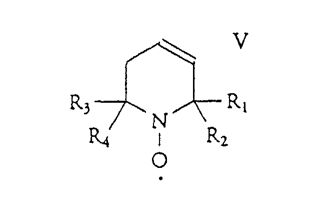 wherein R₁-R₄ are one to four carbon alkyl groups but R₁ with R₂ and R₃ with R₄ may be linked into a five or six carbon alicyclic ring structure. An example of a suitable compound is 3,4-dehydro-2,2,6,6,-tetramethylpiperidinyl-1-oxy free radical. 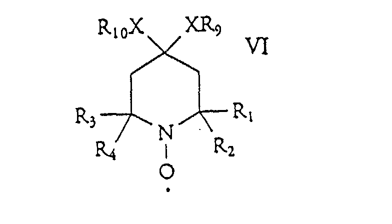 wherein R₁-R₄ are one to four carbon alkyl groups but R₁ with R₂ and R₃ with R₄ may together be included in a five or six carbon alicyclic ring structure; X is methylene, oxygen, sulfur, or alkylamino; and R₉ and R₁₀ are one to five carbon alkyl groups and may together be included in a five or six member ring structure, which, in turn may have a one to four alkyl or hydroxy alkyl substitutients. Examples include the 1,2-ethanediol, 1,3-propanediol, 2,2-dimethyl-1,3-propanediol (1,3-neopentyldiol), and glyceryl cyclic ketals of 2,2,6,6-tetramethyl-4-piperidone-1-oxy free radical. These compounds are especially preferred primary oxidants because of their effectiveness, lower cost, ease of synthesis, and suitable water solubility. 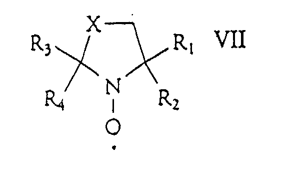 in which R₁-R₄ are one to four carbon alkyl groups but R₁ with R₂ and R₃ with R₄ may together be included in a five or six carbon alicyclic ring structure; and X may be methylene, sulfur, oxygen, -NH, or NR₁₁, in which R₁₁ is a lower alkyl. An example of these five member ring compounds is 2,2,5,5-tetramethylpyrrolidinyl-1-oxy free radical.

Where the term "lower alkyl" is used it should be understood to mean an aliphatic straight or branched chain alkyl moiety having from one to four carbon atoms.

Among the preferred peracids are peroxymonosulfuric acid and peracetic acid in concentrations of 0.5% to 10% based on cellulose. Peroxymonosulfuric acid (Caro's acid) has been found to be particularly useful.

It should again be emphasized that in all cases the primary catalyst may be used as an amine, a hydroxylamine, or in the nitroxyl form to generate the active oxammonium salt.

### Example 1

### Carboxylation of cellulose using TEMPO and Caro's acid

A solution of Caro's acid was formed by adding with stirring 30.0 g of potassium persulfate (K₂S₂O₈) to 45.0 g of concentrated sulfuric acid. The mixture was allowed to react for about 25 minutes. The reaction product so formed was stirred into a beaker containing 200 mL water and 300 g of ice. This was neutralized with Na-HCO₃ to pH 7. A catalyst solution was formed by dissolving 100 mg TEMPO in 50 mL water containing 2.0 g NaBr.

A cellulose pulp slurry was formed by dispersing 26.9 g (25.0 g O.D.) of the kraft pulp in 450 mL of water buffered to pH 8.5 by a NaHCO₃/Na₂CO₃ mixture. The cellulose was a southern pine bleached kraft market pulp obtained from a Weyerhaeuser Co. North Carolina mill and designated as NB 416. Half of the neutralized Caro's acid solution was added and the pH adjusted to 8.5 with Na₂CO₃ solution. Then the aqueous solution of TEMPO and NaBr was added and mixed well into the cellulose slurry. The liquid turned an orange color. Oxidation was allowed to proceed for 15 minutes at 25°C. Then the remaining half of the Caro's acid solution was added and oxidation allowed to proceed an additional 30 minutes at 25°C. The oxidized pulp sample was drained and washed well with deionized water. A small sample was retained for analysis but the bulk of the material was taken to the next stage for stabilization.

The wet oxidized pulp (92 g total, 25 g O.D.) was dispersed in a Na₂HPO₄/citric acid buffer solution at pH 3.5. This contained 3 g of NaHPO₄ and 5 g of citric acid in 937 mL water. To this dispersion was added 6.0 g of 30% H₂O₂ and 6.0 g of NaClO₂. Temperature was 25°C. After 24 hours the pH was raised to 9.5 with an aqueous solution of Na₂CO₃. Then the material was drained and again washed with deionized water.

The unstabilized material had a carboxyl content of 42.4 meq/100g whereas the stabilized sample had a carboxyl content of 47.6 meq/100g.

### Example 2

### Effect on cellulose D.P. after Caro's acid oxidation

An oxidized cellulose sample was prepared in similar manner to that of Example 1 except that the pulp used was a never dried sample of northern mixed conifer bleached kraft furnish obtained from a Weyerhaeuser Company Grand Prairie, Alberta mill. The Caro's acid was prepared from K₂S₂O₈ and 98% sulfuric acid and diluted with deionized water to give 60 mL of a 0.28% solution. This was further diluted with 60 mL of deionized water and adjusted to pH 7.5 with NaHCO₃. The oxidation catalyst was prepared by dissolving 0.012g of the 1,3-propanediol ketal of 2,2,6,6-tetramethyl-4-piperidone-1-oxyl in the Caro's acid solution. Then 51 g (12.5 g O.D.) was suspended in the basic Caro's acid solution and finally 0.25 g of NaBr was added and mixed well. The mixture was placed in a polyethylene bag and heated in a water bath for 15 minutes at 60°C. The fiber was filtered off and washed well in deionized water. A small sample was retained for analysis and the bulk of the material taken to the next stage for stabilization.

The wet oxidized pulp prepared above was dispersed in 250 mL of a Na₂HPO₄/citric acid buffer solution at pH 3.5. To this was added 1.5 g NaClO₂ and 1.5 g 30% H₂O₂. The mixture was again placed in a polyethylene bag and heated in the 60°C water bath for 30 minutes. The pH was then raised to 9.5 with an aqueous solution of Na₂CO₃. The resulting product was then again filtered off and washed with deionized water.

Carboxyl content of the unstabilized sample was 5.8 meq/100 g and 8.8 meq/100 g for the stabilized product. D.P. of the stabilized material was 1479. D.P. of the original untreated pulp was about 1700.

### Example 3

### Stabilization of oxidized cellulose using Caro's acid under acidic conditions

An additional sample of the never dried Alberta pulp was oxidized using 7,7,9,9-tetramethyl-1,4-dioxa-8-azaspiro[4.5]decane-2-methanol rather than TEMPO. This material is also designated as the glyceryl ketal of triacetoneamine. A 145 mg portion of the amine was dissolved in 250g of 0.28% basic Caro's acid solution at pH 7.5. A slurry of 102 g never dried Grand Prairie kraft pulp (25 g O.D.) was then dispersed in the solution. The mixture was placed in a plastic bag and 500 mg NaBr was added and dispersed throughout the mixture. The bag was sealed and placed in a water bath at 60°C for 30 minutes. The oxidized cellulose was drained and thoroughly washed with deionized water. A small portion was retained for analysis and the remainder divided into two parts.

A first 30 g portion of the oxidized cellulose (8.0 g O.D.) was dispersed in 500 mL of Na₂HPO₄/citric acid buffer solution at pH 3.5 for stabilization. Then 3.0 g NaClO₂ and 3.0 g 30% H₂O₂ were added and mixed well. The mixture, contained in a polyethylene bag, was placed in a water bath at 60°C for 30 minutes. The pH was then raised to 9.5 with addition of Na₂CO₃. Then the sample was drained and washed with deionized water.

The second 30 g (8.0 g O.D.) portion of oxidized cellulose was dispersed in 250 g of 0.28% Caro's acid solution at pH 6.5. This was contained in a sealed polyethylene bag and placed in a 60°C water bath for 30 minutes. After stabilization the pH was raised to 9.5 with Na₂CO₃ and the product drained and thoroughly washed.

Prior to stabilization the carboxyl content was 5.4 meq/100g. Following stabilization by the first method using NaClO₂ and H₂O₂ carboxyl content was measured as 11.0 meq/100g and D.P. was 1183. Using the second stabilization method employing Caro's acid the carboxyl content was 10.8 meq/100 g and D.P. was 993.

### Example 4

### 1,3-Propanediol ketal of triacetone amine used to generate its oxammonium salt in situ

A Caro's acid stock solution was prepared using 200 g of 98% H₂SO₄ and 40 g of 70% H₂O₂. An 0.80 g portion of this was added to 100g of deionized water and the pH raised to 7.5 with Na₂CO₃. The concentration of Caro's acid was 0.28% and of H₂O₂ 0.02% by weight. Into this solution was dispersed 51 g (12.5 g O.D.) of the never dried Alberta pulp of Example 2. A catalyst solution was made by dissolving 0.0048 g of the 1,3-propanediol ketal of triacetoneamine and 0.250 g of NaBr in 50 g of a solution brought to pH 7.5 with NaHCO₃. This was added to the cellulose slurry in Caro's acid solution and the mixture was placed in a polyethylene bag and immersed in a 60°C water bath for 15 minutes. After the initial oxidation the pulp was drained and washed and a small sample taken for analysis.

The oxidized cellulose was then dispersed in 500 mL of a Na₂HPO₄/citric acid buffer solution at pH 3.5 for stabilization. To this slurry was added 3.0 g of sodium chlorite and 3.0 g of 30% H₂O₂. The slurry was again placed in a polyethylene bag immersed in the 60°C water bath. After 15 minutes the pH was raised to 9.5 with an aqueous solution of Na₂CO₃. The fiber was again drained and washed with deionized water.

Carboxyl content of the unstabilized material was measured as 5.7 meq/100g and 8.8 meq/100 g for the stabilized material.

### Example 5

### Effect of stabilization on brightness reversion of oxidized pulps

A 100 g batch of carboxylated cellulose was prepared by using 2,2,6,6-tetramethylpiperidine to form the primary oxidant. A first portion of the oxidized material was washed and treated with a solution of about 2 g/L Na₂CO₃ for about 5 minutes at a pH between 9-10. The unstabilized product was then washed with deionized water but left undried. The second portion was stabilized using a NaClO₂/H₂O₂, mixture at about pH 3 as described above. The stabilized product was drained and washed, treated with basic water at pH∼10, and again washed.

Analyses of the original and two treated samples gave the following results:

| **Sample** | **D.P.** | **Carboxyl, meq/100 g** |
|---|---|---|
| Untreated | 1650±100 | 4.0±0.5 |
| Unstabilized | 650* | 13.7±0.5 |
| Stabilized | 1390±60 | 21.6±0.1 |

| | | |
|---|---|---|
| *D.P. results of unstabilized materials are unreliable due to degradation in the alkaline cuene solvent. | | |

Handsheets were then made of the above three samples for study of color reversion after accelerated aging. These were dried overnight at room temperature and 50% R.H. Brightness was measured before and after samples were heated in an oven at 105°C for 1 hour. Heated samples were reconditioned for at least 30 minutes at 50% R.H. Results are as follows:

| **Sample** | **pH** | **Initial ISO Brightness,%** | **Oven-aged ISO Brightness,%** | **Brightnes Reversion, %** |
|---|---|---|---|---|
| Control | 5 | 89.84±0.13 | 88.37±0.12 | 1.48 |
| Control* | 5 | 90.13±0.07 | 88.61±0.13 | 1.52 |
| Unstabilized | Unadjusted | 91.43±0.16 | 78.85±0.28 | 12.59 |
| Unstabilized | 5 | 91.93±0.08 | 87.38± | 4.55 |
| Stabilized | Unadjusted | 92.68±0.09 | 90.74±0.12 | 1.94 |
| Stabilized | 5 | 92.89±0.14 | 91.31±0.12 | 1.57 |

| | | | | |
|---|---|---|---|---|
| * Base washed before testing | | | | |

The superior brightness retention of the stabilized samples is immediately evident from the above test results.

It will be evident to those skilled in the art that many reaction conditions and many hindered nitroxide compounds that have not been exemplified will be satisfactory for use with peracids as secondary oxidants. It is the intention of the inventors that these variations be included within the scope of the invention if encompassed within the following claims.

## Claims

**1.** A method of making a fibrous carboxylated cellulose which comprises:
oxidizing cellulose fiber by reacting it in an aqueous suspension with a sufficient amount of a primary oxidant selected from the group consisting of hindered heterocyclic oxammonium salts in which the carbon atoms adjacent the oxammonium nitrogen lack α-hydrogen substitution, the corresponding amines, hydroxylamines, and nitroxides compounds of these oxammonium salts, and mixtures thereof, and a secondary oxidant selected from peracids and an alkali metal halide salt in a sufficient amount to induce an increase in carboxyl substitution in the cellulose of at least 2 meq/100g; and
protecting the carboxylated fibers against degree of polymerization (D.P.) loss and color deterioration by further treating them in aqueous suspension with a stabilizing agent selected from the group consisting of oxidizing agents and reducing agents in order to remove any cellulose substituents which tend to cause molecular chain breakage.

**2.** The method of claim 1 in which the peracid is selected from the group consisting of peroxymonosulfuric acid, peracetic acid, and mixtures thereof.

**3.** The method of claim 1 in which the alkali metal halide in the secondary oxidant is present in an amount of about 0.1-10% by weight based on cellulose.

**4.** The method of claim 3 in which the alkali metal halide is sodium bromide.

**5.** The method of claim 1 in which the primary oxidant is present in a range of 0.005-1.0% based on weight of cellulose present.

**6.** The method of claim 5 in which the primary oxidant is present in the range of about 0.02-0.25% based on weight of cellulose present

**7.** The method of claim 1 in which the peracid secondary oxidant is present in the range of about 0.1-10% based on weight of cellulose present.

**8.** The method of claim 6 in which the peracid secondary oxidant is present in the range of 0.5-5% based on weight of cellulose present.

**9.** The method of claim 1 in which the initial oxidizing reaction is carried out at a pH between about 5.0-8.5.

**10.** The method of claim 9 in which the initial oxidizing reaction is carried out at a pH between about 7.5-8.0.

**11.** The method of claim 1 in which the initial oxidation step is carried out for a time between 1 minute and about 10 hours at a temperature in the range of about 5°-95°C.

**12.** The method of claim 11 in which the initial oxidation step is carried out for a time between 0.2-2.5 hours at a temperature in the range of 20°-80°C.

**13.** The method of claim 1 which further comprises treating the carboxylated cellulose fibers with a tertiary oxidizing agent to stabilize the product by substantially converting any aldehyde substituents to additional carboxyl groups.

**14.** The method of claim 13 which comprises further stabilizing the carboxylated cellulose fibers after treatment with the tertiary oxidizing agent by treatment with a reducing agent.

**15.** The method of claim 13 in which the tertiary oxidant is selected from the group consisting of alkali metal chlorites, a chlorine dioxide/hydrogen peroxide mixture, and peracids.

**16.** The method of claim 15 in which the tertiary oxidant is a mixture of chlorine dioxide and hydrogen peroxide.

**17.** The method of claim 16 in which chlorine dioxide is present in an amount of about 0.1-20% by weight and hydrogen peroxide is present in an amount of about 0.01-10% by weight based on the cellulose present.

**18.** The method of claim 17 in which chlorine dioxide is present in an amount of about 0.3-1.0% by weight and hydrogen peroxide is present in an amount of about 0.05-1.0% by weight based on the cellulose present.

**19.** The method of claim 16 in which the oxidative stabilization treatment is carried out under acidic conditions in the range of about pH 0-5.

**20.** The method of claim 19 in which the oxidative stabilization treatment is carried out under acidic conditions in the range of about pH 2-3.

**21.** The method of claim 13 in which the tertiary oxidant is sodium chlorite.

**22.** The method of claim 21 in which the sodium chlorite is present during the stabilization reaction in a concentration of about 0.1-20% by weight of cellulose

**23.** The method of claim 22 in which the sodium chlorite is present during the stabilization reaction in a concentration of about 1-9% by weight of cellulose.

**24.** The method of claim 21 in which the oxidative stabilization treatment is carried out under acidic conditions at a pH between about 1.5-5.

**25.** The method of claim 24 in which the oxidative stabilization treatment is carried out under acidic conditions at a pH between about 2-4.

**26.** The method of claim 13 in which the tertiary oxidant is a peracid.

**27.** The method of claim 26 in which the peracid is peroxymonosulfuric acid.

**28.** The method of claim 26 in which the peracid is present in a concentration of about 0.1-10% by weight of cellulose.

**29.** The method of claim 13 in which the tertiary oxidant is present in the aqueous suspension during the stabilization reaction in a molar ratio of 5 - 10 times the presumed aldehyde substitution on the carboxylated cellulose.

**30.** The method of claim 13 in which the oxidation during the stabilization reaction proceeds for a time between 5 minutes and 50 hours.

**31.** The method of claim 30 in which the oxidation during the stabilization reaction proceeds for a time between 10 minutes and 2 hours.

**32.** The method of claim 1 which further comprises treating the carboxylated cellulose fibers with a reducing agent to stabilize the product by substantially converting any aldehyde or ketone carbonyl substituents to hydroxyl groups.

**33.** The method of claim 32 in which the reducing agent in the aqueous suspension is a borohydride salt selected from the group consisting of alkali metal borohydrides, cyanoborohydrides, and mixtures thereof.

**34.** The method of claim 33 in which the reducing agent is present in an amount of about 0.1-4.0% by weight of oxidized cellulose.

**35.** The method of claim 34 in which the reducing agent is present in an amount of about 1.0-3.0% by weight of oxidized cellulose.

**36.** The method of claim 32 in which the reduction reaction proceeds for a time between 10 minutes and 2 hours.

**37.** The method of claim 1 in which the cellulose fiber is selected from the group consisting of bleached and unbleached kraft wood pulps, prehydrolyzed kraft wood pulps, sulfite wood pulps and mixtures thereof.

**38.** The method of claim 36 in which the cellulose fiber is recycled secondary fiber.

**39.** A method of making a fibrous carboxylated cellulose which comprises:
oxidizing cellulose fibers by reacting them in an aqueous suspension with a sufficient amount of a primary oxidant selected from the group consisting of nitroxides having the composition 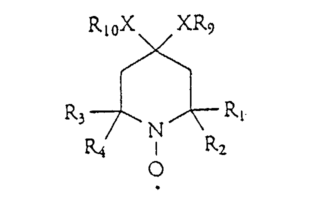
wherein R₁-R₄ are one to four carbon alkyl groups but R₁ with R₂ and R₃ with R₄ may together be included in a five or six carbon alicyclic ring structure, X is methylene, oxygen, sulfur, or alkylamino, and R₉ and R₁₀ are one to five carbon alkyl groups and may together be included in a five or six member ring structure, which, in turn, may contain one to four substituent groups, the corresponding oxammonium compounds, amines, and hydroxylamines of these nitroxides, and mixtures thereof, and a sufficient amount of a secondary oxidant comprising a peracid with an alkali metal halide salt to induce an increase in carboxyl substitution in the cellulose of at least 2 meq/100g; and
protecting the carboxylated fibers against degree of polymerization (D.P.) loss by further treating them in aqueous suspension with a stabilizing agent selected from the group consisting of reducing agents and tertiary oxidizing agents in order to remove any cellulose substituents which tend to cause molecular chain breakage.

**40.** The method of claim 39 in which each X is oxygen, the oxygen atoms being linked by a two to three carbon alkyl chain to form a cyclic ketal substituent.

**41.** The method of claim 40 in which the nitroxide composition is selected from the group consisting of the 1,2-ethanediol, 1,3-propanediol, 2,2-dimethyl-1,3-propanediol, and the glyceryl ketals of 2, 2, 6, 6-tetramethyl-4-piperidone-1-oxy free radical.

**42.** The method of claim 41 in which the nitroxide composition is the 1,2-ethanediol ketal of 2, 2, 6, 6-tetramethyl-4-piperidone-1-oxy free radical.

**43.** The method of claim 41 in which the nitroxide composition is the 1,3-propanediol ketal of 2,2,6,6-tetramethyl-4-piperidone- 1-oxy free radical.

**44.** The method of claim 41 in which the nitroxide composition is the 2,2-dimethyl-1,3-propanediol ketal of 2,2,6,6-tetramethyl-4-piperidone-1-oxy free radical.

**45.** The method of claim 41 in which the nitroxide composition is the glyceryl ketal of 2,2,6,6-tetramethyl-4-piperidone-1-oxy free radical.

**46.** The method of claim 39 in which the peracid is selected from the group consisting of peroxymonosulfuric acid and peracetic acid.

**46.** The method of claim 39 in which the peracid is peroxymonosulfuric acid.

**47.** The method of claim 39 in which the peracid is peracetic acid.
